# FASCICULE DE BREVET EUROPEEN

(11) **EP 1 224 137 B1**
(45) Date de publication et mention de la délivrance du brevet: **10.03.2004**
(21) Numéro de dépôt: 00971479.1
(22) Date de dépôt: 23.10.2000
(51) Int. Cl.: B65G 47/71, B65G 47/76, B65G 47/84

(54) **INSTALLATION DE TRANSFERT DE RECIPIENTS COMPORTANT UN ORGANE DE DEVIATION**
FÖRDERVORRICHTUNG FÜR BEHÄLTER MIT EINER ABLENKEINRICHTUNG
INSTALLATION FOR TRANSFERRING CONTAINERS, COMPRISING A DEVIATING MECHANISM

(30) Priorité: 29.10.1999 FR 9913570
(43) Date de publication de la demande: 24.07.2002
(73) Titulaire: SERAC GROUP, 72400 La Ferté-Bernard (FR)
(72) Inventeur: DE VILLELE, Damien, F-72400 La Ferte Bernard (FR)
(74) Mandataire: Fruchard, Guy
(86) Numéro de dépôt international: PCT/FR2000/002942
(87) Numéro de publication internationale: WO 2001/030674

(56) Documents cités:
- EP-A- 0 071 068
- US-A- 4 369 873
- US-A- 4 467 908
- PATENT ABSTRACTS OF JAPAN vol. 005, no. 172 (M-095), 31 octobre 1981 (1981-10-31) & JP 56 099123 A (TAKEDA CHEM IND LTD), 10 août 1981 (1981-08-10)

## Description

La présente invention concerne une installation de transfert de récipients selon le préambule de la revendication 1, ayant un col pourvu d'une collerette. Une installation de ce type est par exemple utilisable dans une ligne d'embouteillage.

Dans une ligne d'embouteillage, il est courant de prévoir des installations de transfert répartissant les récipients arrivant dans l'installation entre deux voies de sortie. Par exemple, une telle installation peut être disposée à la sortie d'un carrousel de bouchage des récipients pour diriger les récipients correctement bouchés vers une zone de conditionnement en lots et les récipients mal bouchés vers une zone de stockage.

On connaît des installations de transfert comprenant une bande transporteuse principale, une bande transporteuse de dérivation, et un organe de déviation mobile entre une position en saillie dans laquelle l'organe de déviation amène les récipients disposés sur la bande transporteuse principale vers la bande transporteuse de dérivation et une position escamotée pour laquelle les récipients restent sur la bande transporteuse principale. Une telle installation n'est efficace que si le récipient à dévier est stable sans quoi il risque de tomber lors de la déviation. Afin de ne pas déséquilibrer le récipient lors de la déviation, l'organe de déviation est appliqué au niveau du centre de gravité du récipient sur le corps de celui-ci. Il est donc nécessaire de régler l'organe de déviation en fonction de la hauteur des récipients. Du fait que la déviation est réalisée sur le corps du récipient, l'amplitude du déplacement de l'organe de déviation est relativement importante ce qui limite la cadence de fonctionnement d'une telle installation. De plus, pour éviter une déviation brusque qui risquerait de déséquilibrer les récipients, la vitesse de la bande transporteuse principale est relativement faible.

Il existe également des installations de transfert par le col qui comprennent une étoile de transport amont, un premier dispositif de transport aval constitué d'une étoile de transport et un deuxième dispositif de transport aval. L'étoile de transport amont et l'étoile de transport du premier dispositif de transport aval ont un pourtour équipé de pinces de préhension des récipients par le col. Ces pinces sont reliées à des moyens de commande individuelle. Ainsi, un récipient est transféré de l'étoile de transport amont vers le premier dispositif de transport aval en ouvrant la pince qui maintenait ce récipient sur l'étoile de transport amont et en refermant simultanément sur ce récipient la pince correspondante de l'étoile de transport du premier dispositif de transport aval. Lorsqu'un récipient doit être transféré de l'étoile de transport amont vers le deuxième dispositif de transport aval, la pince correspondante de l'étoile de transport amont est maintenue fermée au passage du premier dispositif de transport aval tandis que la pince correspondante de l'étoile de transport du premier dispositif de transport aval est laissée ouverte. Une telle installation est complexe en particulier en ce qui concerne la commande individuelle des pinces. De plus, les pinces sont soumises à des frottements et à des efforts provoquant une usure de celles-ci relativement importante.

Il est par ailleurs connu du document JP-A-56 099 123 une installation de transfert de récipients ayant un corps surmonté d'un col, l'installation comprenant une étoile de transport amont, un premier dispositif de transport aval constitué d'une étoile de transport, un guide amont fixe s'étendant autour d'une partie de l'étoile de transport amont jusqu'au premier dispositif de transport aval, un guide aval fixe ayant une première branche s'étendant à partir de l'étoile de transport amont autour d'une partie de l'étoile de transport du premier dispositif de transport aval et un organe de déviation des récipients entre l'étoile de transport amont et le premier dispositif de transport aval.

Un but de l'invention est de fournir une installation de transfert de récipients qui soit simple et économique tout en permettant des cadences élevées.

En vue de la réalisation de ce but, on prévoit, selon l'invention, une installation de transfert de récipients ayant un corps surmonté d'un col pourvu d'une collerette, l'installation comprenant une étoile de transport amont adaptée à supporter les récipients par la collerette, un premier dispositif de transport aval constitué d'une étoile de transport, au moins un deuxième dispositif de transport aval, un guide amont fixe s'étendant autour d'une partie de l'étoile de transport amont jusqu'au premier dispositif de transport aval et un guide aval fixe ayant une première branche s'étendant à partir de l'étoile de transport amont autour. d'une partie de l'étoile de transport du premier dispositif de transport aval et une deuxième branche s'étendant autour d'une partie de l'étoile de transport amont entre le premier et le deuxième dispositif de transport aval. L'installation comprend un organe de déviation monté au-dessus de l'étoile de transport amont et de l'étoile de transport du premier dispositif de transport aval pour être mobile entre une première position dans laquelle l'organe de déviation prolonge la première branche du guide aval au-dessus de l'étoile de transport amont et une deuxième position dans laquelle l'organe de déviation relie le guide amont à la deuxième branche du guide aval.

Le transfert de l'étoile de transport amont vers l'étoile de transport du premier dispositif de transport aval est de la sorte réalisé par une déviation du col du récipient. Le col du récipient ayant généralement une dimension transversale relativement faible, l'amplitude des déplacements de l'organe de déviation est peu importante de sorte que les déplacements de l'organe de déviation peuvent être très rapides. En outre, pour un espacement donné des bouteilles, la distance séparant deux cols est relativement grande de sorte qu'on dispose d'un temps suffisant pour introduire l'organe de déviation entre deux cols même lorsque la cadence de défilement des récipients est élevée. De plus, l'organe de déviation est situé au-dessus des étoiles de transport où l'espace disponible est en général relativement important, ce qui simplifie la construction de l'installation de transfert.

Selon un mode de réalisation particulier, l'organe de déviation comprend deux jeux de segments en regard et l'installation comprend des moyens de déplacement des segments de chaque jeu indépendamment les uns des autres. Lorsque les cadences sont très élevées ou que les cols sont faiblement espacés, le déplacement des segments indépendamment les uns des autres permet de dévier un récipient sans interférer avec le récipient suivant.

D'autres caractéristiques et avantages de l'invention ressortiront à la lecture de la description qui suit d'un mode de réalisation particulier non limitatif de l'invention.

Il sera fait référence aux dessins annexés, parmi lesquels :
- les figures 1 et 2 sont des vues schématiques illustrant le fonctionnement de l'installation de transfert conforme à l'invention dans deux positions différentes de l'organe de déviation,
- la figure 3 est une vue partielle d'un premier mode de réalisation de l'organe de déviation, en coupe partielle selon la ligne III-III de la figure 1,
- la figure 4 est une vue analogue à la figure 3 d'un deuxième mode de réalisation de l'organe de déviation.

L'installation de transfert conforme à l'invention dont le mode de réalisation préféré est illustré est destinée au transport de récipients généralement désignés en 2 comportant un corps 3 surmonté par un col 4 qui est entouré par une collerette 5 et un goulot qui est obturé par un bouchon 6. L'installation de transfert généralement désignée en 1 est ici disposée dans une ligne d'embouteillage pour décharger un carrousel de bouchage 7.

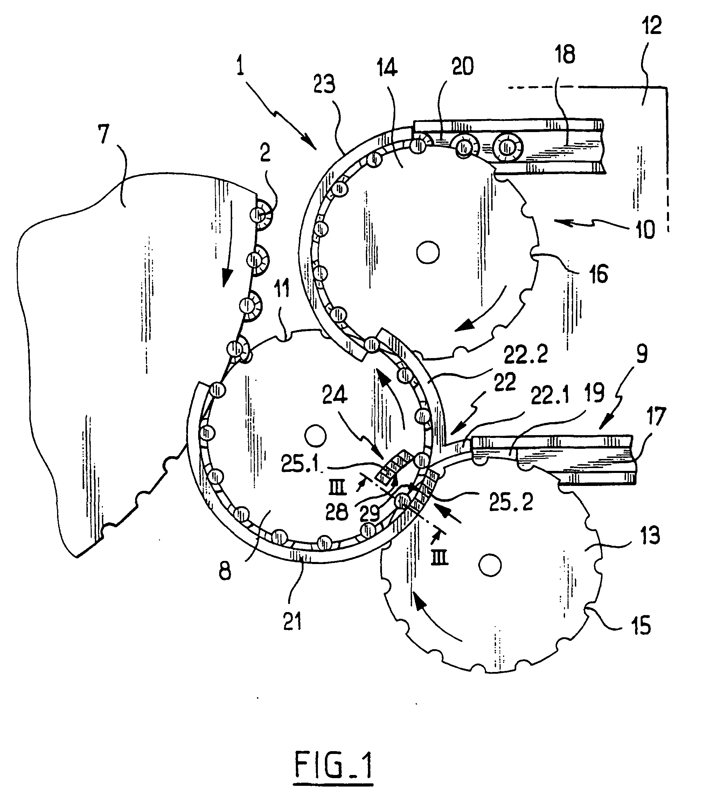

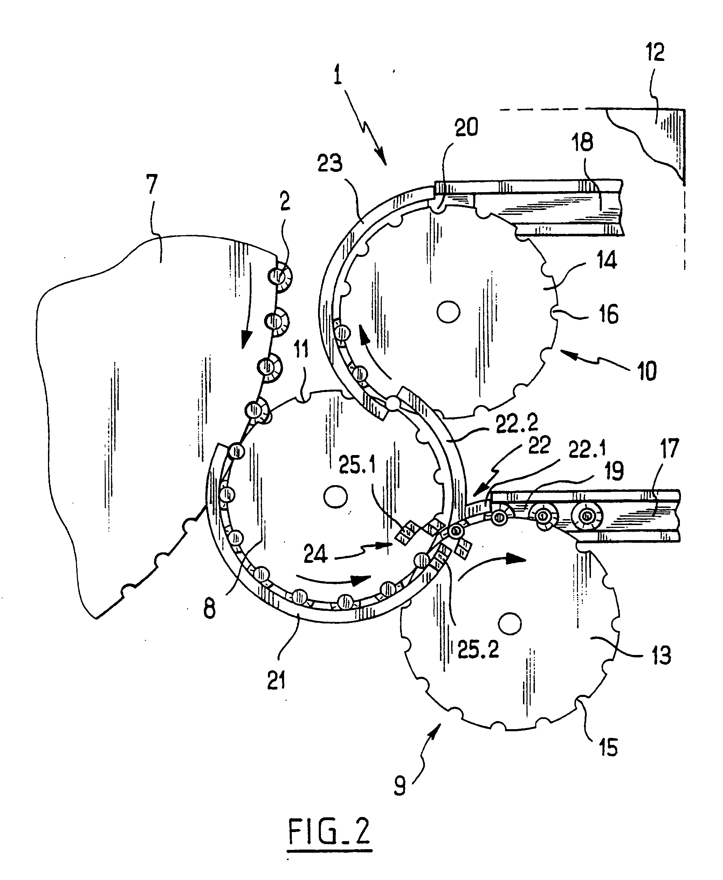

En référence aux figures 1 et 2, l'installation de transfert 1 comprend une étoile de transport amont 8 et deux dispositifs de transport aval 9 et 10.

L'étoile de transport amont 8 a un pourtour pourvu d'alvéoles 11 pour recevoir les cols 4 des récipients 2 et supporter ceux-ci par la collerette 5. L'étoile de transport amont est montée sur un bâti 12 pour pivoter en regard du carrousel 7.

Chaque dispositif de transport aval 9, 10 comprend une étoile de transport 13, 14 ayant un pourtour pourvu d'alvéoles 15, 16 pour recevoir les cols 4 des récipients 2 et supporter ceux-ci par la collerette 5. Les étoiles de transport 13, 14 comprennent de préférence chacune un plateau inférieur 32 qui est disposé en dessous de l'étoile de transport correspondante et possède un pourtour pourvu d'alvéoles 33 pour recevoir les corps 3 des récipients 2 transportés. Les étoiles de transport 13, 14 sont montées sur le bâti 12 pour pivoter en regard de l'étoile de transport amont 8.

Chaque dispositif de transport aval 9, 10 comprend en outre un convoyeur 17, 18 d'évacuation s'étendant tangentiellement par rapport à l'étoile de transport 13, 14 à partir de celle-ci. Une platine inclinée 19, 20 formant une rampe montante vers le convoyeur correspondant est disposée immédiatement avant le convoyeur 17, 18.

Un guide amont 21 fixé au bâti 12 entoure une partie de l'étoile de transport amont 8 et possède une extrémité s'étendant au-dessus du carrousel 7 pour interférer avec la trajectoire du goulot des récipients et une extrémité opposée s'étendant de façon correspondante au-dessus de l'étoile de transport 13.

Un guide aval 22 sensiblement en forme de V est fixé au bâti 12. Le guide aval 22 comporte une première branche 22.1 s'étendant à partir de l'étoile de transport amont 8 autour d'une partie de l'étoile de transport 13 jusqu'au convoyeur 17 et une deuxième branche 22.2 s'étendant autour d'une partie de l'étoile de transport amont 8 à partir de l'étoile de transport 13 jusqu'à l'étoile de transport 14.

De façon analogue au guide amont 21, un deuxième guide aval 23 s'étend autour de l'étoile de transport 14 et a une extrémité s'étendant au-dessus de l'étoile de transport amont 8 et une extrémité opposée adjacente au convoyeur 18.

Un organe de dérivation généralement désigné en 24 est disposé au-dessus de l'étoile de transport amont 8 et de l'étoile de transport 13.

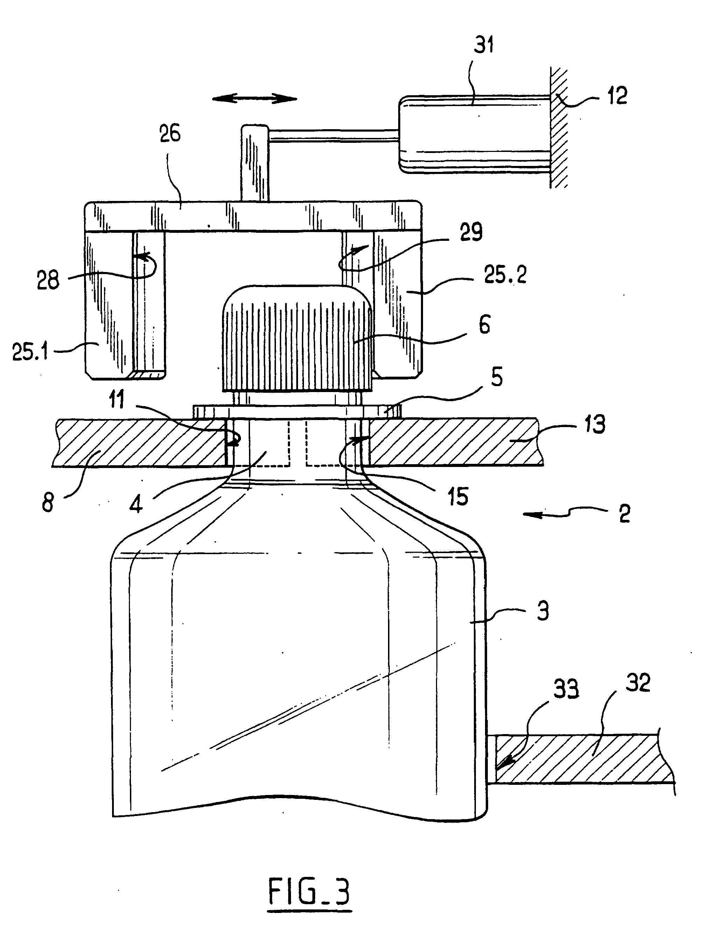

Selon un premier mode de réalisation représenté à la figure 3, l'organe de déviation 24 comprend deux jeux de segments, respectivement 25.1 et 25.2 en regard (seulement deux de ces segments sont représentés à la figure 3).

Chaque segment 25.1 est relié au segment 25.2 en regard par un élément support 26 associé à un vérin 31 porté par le bâti 12 pour coulisser parallèlement au plan des étoiles de transport 8 et 13. Les surfaces en regard des segments 25.1 et 25.2 définissent respectivement des surfaces de guidage 28 et 29. Lorsque les couples de segments 25.1, 25.2 en regard sont dans une première position, la surface de guidage 28 vient prolonger la première branche 22.1 du guide aval 22 au-dessus de l'étoile de transport amont 8. Lorsque les couples de segments 25.1, 25.2 sont dans leur deuxième position (comme représenté à la figure 3), la surface de guidage 29 relie le guide amont 21 à la deuxième branche 22.2 du guide aval 22. La course de déplacement des segments 25.1, 25.2 est choisie pour être légèrement supérieure au diamètre du bouchon 6.

En fonctionnement, les couples de segments 25.1 et 25.2 étant dans leur deuxième position et le carrousel 7 et les étoiles de transport 8, 13, 14 étant en rotation dans les sens indiqués à la figure 1, les récipients 2 sont déchargés du carrousel de bouchage 7 et sont maintenus sur l'étoile de transport amont 8 par le guide amont 21. Les alvéoles 11 reçoivent alors les cols 5 des récipients 2 de manière que ceux-ci soient supportés par leurs collerettes 5.

Les récipients 2 sont ensuite maintenus sur l'étoile de transport amont 8 par la surface de guidage 29 définie par les segments 25.2 au niveau de l'étoile de transport 13 puis par la deuxième branche 22.2 du guide aval 22. Les récipients 2 sont ensuite déchargés de l'étoile de transport amont 8 par le deuxième guide aval 23 puis sont maintenus sur l'étoile de transport 14 par celui-ci jusqu'au convoyeur 18.

Lors de la rotation de l'étoile de transport 14, le fond du récipient 2 prend appui sur la platine inclinée 20 disposée en amont du convoyeur 18. Dans ce mouvement, la platine 20 soulève le récipient 2 et décolle la collerette 5 de l'étoile de transport 14 avant que le récipient 2 arrive sur le convoyeur 18. Ceci a pour effet de stabiliser le récipient lors de son arrivée sur le convoyeur 18 et permet un fonctionnement à cadence élevée. On remarquera que le plateau de guidage inférieur 32 en regard du corps des récipients assure lui aussi une meilleure stabilité pendant les transferts.

Pour dévier les récipients supportés par l'étoile de transport amont 8 vers l'étoile de transport 13, les vérins 31 sont actionnés afin de déplacer successivement les couples de segments 25.1, 25.2 dès que le dernier récipient 2 devant être conduit vers l'étoile de transport 14 n'est plus en contact avec le segment 25.2 correspondant. Les récipients 2 maintenus sur l'étoile de transport amont 8 par le guide amont 21 viennent alors en contact de la surface du guidage 28 définie par les segments 25.1 dans leur première position et sont maintenus sur l'étoile de transport 13 jusqu'à être déposés, comme décrit pour le dispositif de transport aval 10, sur le convoyeur 17 (voir figure 2). Sur la figure 2 les couples de segments 25.1, 25.2 ont été représentés dans une position permettant la fin du déchargement d'un récipient non bouché vers le convoyeur 17 tandis que le récipient suivant est déjà en cours de guidage vers le convoyeur 18.

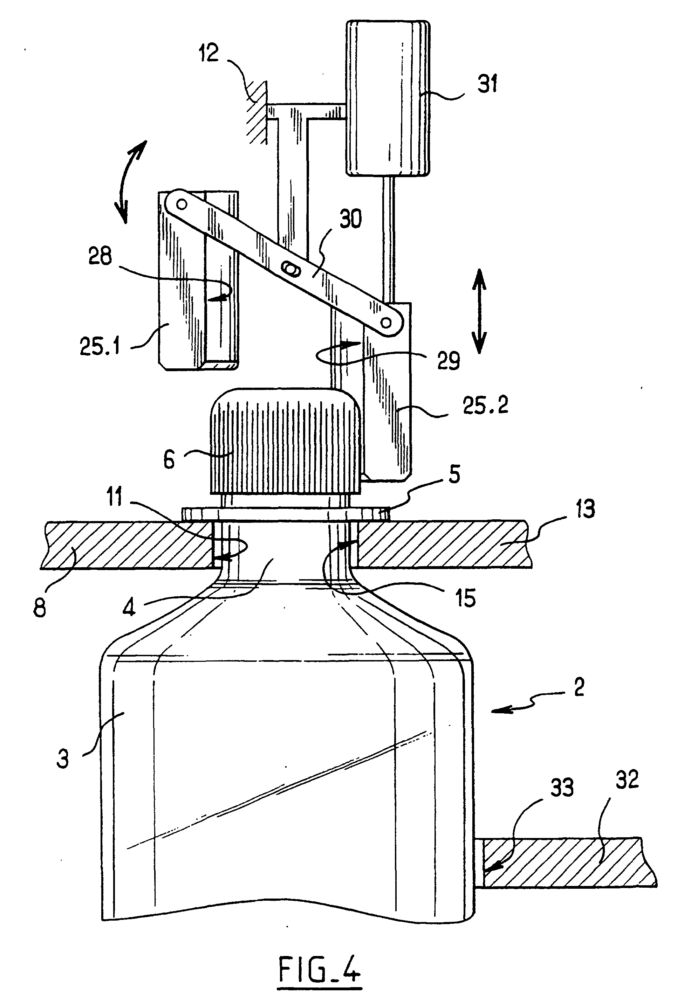

Les éléments identiques ou analogues à ceux décrits précédemment porteront une référence numérique identique dans la description du deuxième mode de réalisation de l'organe de déviation 24 décrit en relation avec la figure 4.

Dans ce mode de réalisation, les segments 25.1, 25.2 sont montés sur le bâti 12 pour se déplacer verticalement. Les segments 25.1, 25.2 en regard sont reliés deux à deux de façon articulée par l'intermédiaire d'une bascule 30 montée pour pivoter sur le bâti 12 et reliée à un vérin 31.

La course de déplacement des segments 25.1, 25.2 est choisie pour être légèrement inférieure à la hauteur du goulot.

Ainsi lorsque les segments 25.1 sont en position haute, les segments 25.2 sont en position basse et inversement. Les goulots des récipients 2, qu'ils soient bouchés ou non, sont alors guidés par les segments en position basse et passent sous les segments en position haute.

Le fonctionnement de l'organe de déviation selon le deuxième mode de réalisation est analogue à celui du premier mode de réalisation.

Bien entendu, l'invention n'est pas limitée au mode de réalisation décrit et on peut y apporter des variantes de réalisation sans sortir du cadre de l'invention tel que défini par les revendications.

En particulier, les segments 25.1, 25.2 en regard peuvent être indépendants les uns des autres mais il faut alors prévoir des organes de commandes synchronisés pour les segments en regard.

En outre, les segments peuvent être montés sur le bâti 12 pour pivoter de façon excentrée autour d'un axe vertical.

Par ailleurs, bien que l'organe de déviation 24 ait été décrit comme étant formé de deux jeux de segments en regard, l'organe de déviation 24 peut être formé de deux palettes en regard l'une de l'autre. Cette réalisation est surtout intéressante lorsque la distance séparant les récipients sur les étoiles de transport est relativement grande, ce qui permet toutefois d'obtenir des cadences moins élevées qu'avec des récipients très rapprochés.

Bien que l'installation selon l'invention ait été décrite avec un deuxième dispositif de transport aval sous forme d'une étoile de transport intermédiaire, on peut prévoir d'utiliser un convoyeur linéaire directement raccordé à l'étoile de transport amont. On peut également prévoir plus de deux dispositifs de transport aval.

## Revendications

1. Installation de transfert de récipients ayant un corps surmonté d'un col, l'installation comprenant une étoile de transport amont (8), un premier dispositif de transport aval (9) constitué d'une étoile de transport (13), un guide amont (21) fixe s'étendant autour d'une partie de l'étoile de transport amont jusqu'au premier dispositif de transport aval, un guide aval (22) fixe ayant une première branche (22.1) s'étendant à partir de l'étoile de transport amont autour d'une partie de l'étoile de transport du premier dispositif de transport aval et un organe de déviation des récipients entre l'étoile de transport amont et le premier dispositif de transport aval, **caractérisée en ce que** l'étoile de transport amont est adaptée à supporter les récipients par une collerette en saillie du col des récipients, **en ce que** l'installation comprend au moins un deuxième dispositif de transport aval (10), le guide aval ayant une deuxième branche (22.2) s'étendant autour d'une partie de l'étoile de transport amont entre le premier et le deuxième dispositif de transport aval, et **en ce que** l'organe de déviation (24) est monté au-dessus de l'étoile de transport amont et de l'étoile de transport du premier dispositif de transport aval pour être mobile entre une première position dans laquelle l'organe de déviation prolonge la première branche du guide aval au-dessus de l'étoile de transport amont et une deuxième position dans laquelle l'organe de déviation relie le guide amont à la deuxième branche du guide aval.

2. Installation de transfert selon la revendication 1, **caractérisé en ce que** l'organe de déviation (24) comprend deux jeux de segments (25.1, 25.2) en regard et **en ce que** l'installation comprend des moyens (31) de déplacement des segments de chaque jeu indépendamment les uns des autres.

3. Installation de transfert selon la revendication 2, **caractérisé en ce que** les segments (25.1, 25.2) sont montés pour coulisser selon une direction verticale.

4. Installation de transfert selon la revendication 2, **caractérisé en ce que** les segments (25.1, 25.2) en regard sont reliés les uns aux autres par une bascule (30).

5. Installation de transfert selon l'une des revendications 1 à 4, **caractérisé en ce que** l'étoile de transport aval comporte un plateau inférieur (32) comportant des alvéoles (33) disposées pour s'étendre en regard du corps des récipients.

## Claims

1. An installation for transferring receptacles each having a body surmounted by a neck, the installation comprising an upstream transport starwheel (8), a first downstream transport device (9) constituted by a transport starwheel (13), at least one second downstream transport device (10), a fixed upstream guide (21) extending around a portion of the upstream transport starwheel as far as the first downstream transport device, a fixed downstream guide (22) having a first branch (22.1) extending from the upstream transport starwheel around a portion of the transport starwheel of the first downstream transport device and a deflector member of the receptacles between the upstream transport starwheel and the first downstream transport device, **characterized in that** the upstream transport starwheel is adapted to support the receptacles by a collar protruding from the neck of the receptacles, **in that** the installation comprises at least one second downstream transport device (10), the downstream guide having a second branch (22.2) extending around a portion of the upstream transport starwheel between the first and second downstream transport devices, and **in that** the deflector member (24) is mounted above the upstream transport starwheel and the transport starwheel of the first downstream transport device to move between a first position in which the deflector member extends the first branch of the downstream guide above the upstream transport starwheel, and a second position in which the deflector member connects the upstream guide to the second branch of the downstream guide.

2. A transfer installation according to claim 1, **characterized in that** the deflector member (24) comprises two facing rows of segments (25.1, 25.2), and **in that** the installation has means (31) for displacing the segments of each row independently of one another.

3. A transfer installation according to claim 2, **characterized in that** the segments (25.1, 25.2) are mounted to slide in a vertical direction.

4. A transfer installation according to claim 2, **characterized in that** facing segments (25.1, 25.2) are connected to each other by a rocker (30).

5. A transfer installation according to any one of claims 1 to 4, **characterized in that** the downstream transport starwheel has a lower turntable (32) with slots (33) disposed to extend in register with the bodies of the receptacles.

## Patentansprüche

1. Übergabevorrichtung für Behälter mit einem Körper und einem diesen überragenden Behälterhals, umfassend einen stromaufwärts gelegenen Transportstern (8), eine erste stromabwärts gelegene Transportvorrichtung (9), die von einem Transportstern (13) gebildet ist, ein stromaufwärts gelegenes feststehendes Führungselement (21), das sich um einen Abschnitt des stromaufwärts gelegenen Transportsterns herum bis zu der ersten stromabwärts gelegenen Transportvorrichtung erstreckt, ein stromabwärts gelegenes feststehendes Führungselement (22) mit einem ersten Zweig (22.1), der sich ausgehend von dem stromaufwärts gelegenen Transportstern um einen Abschnitt des Transportsterns der ersten stromabwärts gelegenen Transportvorrichtung herum erstreckt, und eine Vorrichtung zum Ablenken der Behälter zwischen dem stromaufwärts gelegenen Transportstern und der ersten stromabwärts gelegenen Transportvorrichtung, **dadurch gekennzeichnet, daß** der stromaufwärts gelegene Transportstern dazu geeignet ist, die Behälter an einem vom Behälterhals abstehenden Flansch zu tragen, die Fördervorrichtung zumindest eine zweite stromabwärts gelegene Transportvorrichtung (10) umfaßt, wobei das stromabwärts gelegene Führungselement einen zweiten Zweig (22.2) hat, der sich um einen Abschnitt des stromaufwärts gelegenen Transportsterns zwischen der ersten und der zweiten stromabwärts gelegenen Transportvorrichtung herum erstreckt, und die Ablenkvorrichtung (24) oberhalb des stromaufwärts gelegenen Transportsterns und des Transportsterns der ersten stromabwärts gelegenen Transportvorrichtung angeordnet ist, um zwischen einer ersten Position, in der die Ablenkvorrichtung den ersten Zweig des stromabwärts gelegenen Führungselements über den stromaufwärts gelegenen Transportstern hinaus verlängert, und einer zweiten Position bewegbar zu sein, in der die Ablenkvorrichtung das stromaufwärts gelegene Führungselement mit dem zweiten Zweig des stromabwärts gelegenen Führungselements verbindet.

2. Fördervorrichtung nach Anspruch 1, **dadurch gekennzeichnet, daß** die Ablenkvorrichtung (24) zwei einander gegenüberliegende Segmentsätze (25.1, 25.2) umfaßt, und die Fördervorrichtung Mittel (31) hat, durch welche die Segmente jedes Satzes unabhängig voneinander verschoben werden können.

3. Fördervorrichtung nach Anspruch 2, **dadurch gekennzeichnet, daß** die Segmente (25.1, 25.2) derart angeordnet sind, daß sie in vertikaler Richtung gleiten.

4. Fördervorrichtung nach Anspruch 2, **dadurch gekennzeichnet, daß** die einander gegenüberliegenden Segmente (25.1, 25.2) über eine Wippe miteinander verbunden sind.

5. Fördervorrichtung nach einem der Ansprüche 1 bis 4, **dadurch gekennzeichnet, daß** der stromabwärts gelegene Transportstern eine untere Platte (32) umfaßt, die Aussparungen (33) aufweist, die derart angeordnet sind, daß sie mit den Körpern der Behälter fluchten.
